# EUROPEAN PATENT SPECIFICATION

(11) **EP 4 646 805 B1**
(45) Date of publication and mention of the grant of the patent: **16.09.2026**
(21) Application number: 23833142.5
(22) Date of filing: 20.12.2023
(51) Int. Cl.: H04B 10/112, H04B 10/114, H04B 10/116

(54) **INCORPORATING OPTICAL DATA COMMUNICATIONS WITH OTHER SENSING FUNCTIONALITY IN A VEHICLE**
INTEGRATION VON OPTISCHER DATENKOMMUNIKATION MIT ANDERER ERFASSUNGSFUNKTIONALITÄT IN EINEM FAHRZEUG
INTÉGRATION DE COMMUNICATIONS DE DONNÉES OPTIQUES AVEC D'AUTRES FONCTIONNALITÉS DE DÉTECTION DANS UN VÉHICULE

(30) Priority: 05.01.2023 US 202363437164 P; 01.02.2023 EP 23154407
(43) Date of publication of application: 12.11.2025
(73) Proprietor: Signify Holding B.V., 5656 AE Eindhoven (NL)
(72) Inventor: BLUSCHKE, Andreas, Felix, Alfred, 5656 AE Eindhoven (NL); JORDAN, Christian, 5656 AE Eindhoven (NL); SUMASTA, Pamungkas, Prawisuda, 5656 AE Eindhoven (NL); WILLEBRAND, Heinz, Alex, 5656 AE Eindhoven (NL)
(74) Representative: Verweij, Petronella Daniëlle
(86) International application number: PCT/EP2023/086903
(87) International publication number: WO 2024/146802

(56) References cited:
- JP-A- H11 355 212
- RAJA GUNASEKARAN ET AL: "Intelligent Reward-Based Data Offloading in Next-Generation Vehicular Networks", IEEE INTERNET OF THINGS JOURNAL, IEEE, USA, vol. 7, no. 5, 18 February 2020 (2020-02-18), pages 3747 - 3758, XP011788128, DOI: 10.1109/JIOT.2020.2974631

## Description

### TECHNICAL FIELD

The present disclosure relates to the incorporation of optical data communications into a digital vehicle that additionally has one or more data sensing functions.

### BACKGROUND

In modern digital vehicles more and more electronics are used, e.g. for vehicle-to-vehicle (V2V) communication, vehicle-to-infrastructure (V2I) communication, or sensing of the vehicles' surroundings. Most devices and functionalities of the vehicle are connected to a networking infrastructure incorporated within the vehicle. Such an infrastructure may, for example, use Automotive Ethernet or A-PHY as the protocol for the physical layer.

Automotive Ethernet enables faster data communication to meet the bandwidth demands of today's vehicles and the connected vehicles of the future. The term "Automotive Ethernet" can be used in reference to any Ethernet-based network for in-vehicle electrical systems. A-PHY is a new IEEE 2977-2021 automotive standard was approved and published in mid-2021. It is an IEEE adopted standard of the MIPI Alliance specification for the A-PHY interface. The A-PHY is referred to as a long-reach SerDes physical layer interface with distances up to 15 m compared with D-PHY and C-PHY, which is restricted in length to 15 cm. This specification eliminates the need for additional PHY bridges to accommodate long-reach SerDes for CSI-2 (MIPI camera protocols). The first chipsets are available now, for instance, from Valens Semiconductor.

It has also recently been proposed to include LiFi in vehicles. Examples of potential LiFi usage in vehicle-based applications include V2V (vehicle-to-vehicle) communication for cooperative adaptive cruise control, and platooning or other coordinated driving applications.

Another use case for V2I (vehicle-to-infrastructure) communication is data offloading, for example as may be required from automated guided vehicles (AGVs). AGVs collect a huge amount of data during their journeys, which must be transferred when they return to the charging station or parking position. The time for data offloading may be very limited, and should preferably not take longer than the charging process itself in order to ensure e.g. 24/7 operation of public transportation vehicles like cabs or delivery vehicles. A high-speed data download link is therefore beneficial.

JPH11355212A is related to an optical beacon transmitting / receiving apparatus mounted on a vehicle, which is used to communicate with a VICS (Vehicle Information) optical beacon road machine installed on the road.

### SUMMARY

However modern digital vehicles are not yet prepared for LiFi interfaces. There remains a question of how LiFi or other such optical (i.e. light-based) data communication technologies can be efficiently integrated alongside the other infrastructure of a vehicle, such as an Automotive Ethernet or A-PHY cable infrastructure that may be used for other sensing functionality (e.g. cameras, radar, or radio-based data communications).

It is recognized herein that the relative usage of optical communication vs. sensing will likely depend on the state of motion of the vehicle. On this basis it is possible to simplify the amount of physical infrastructure needed to incorporate optical (light-based) data communications into a vehicle, by sharing the cable infrastructure used for existing sensing operations on a time-shared basis.

Hence according to one aspect disclosed herein, there is provided a system for use on board a vehicle (22), the system comprising: an electronic controller, a sensor device, an optical wireless transmitting device, a cable infrastructure having a first end connected to the electronic controller, and an interface connected between a second end of the cable infrastructure and the sensor device and the optical wireless transmitting device. The interface is operable to select, on a time-shared basis, between using the cable infrastructure for: i) a first function of transferring incoming data sensed by the sensor device to the electronic controller, and ii) a second function of transferring outgoing data from the electronic controller to the optical wireless transmitting device so as to be transmitted optically from the optical wireless transmitting device; wherein the interface is configured to perform the selection in dependence on a state of motion of the vehicle; wherein the interface is configured such that the performance of said selection in dependence on the state of motion of the vehicle comprises:
using the cable infrastructure for the second function but not the first function when the vehicle is stationary, and/or
using the cable infrastructure for the first function but not the second function when the vehicle is moving.

The optical transmitting device may use visible light, infrared or ultraviolet for the optical transmission. In embodiments it uses visible light communication. For example the optical transmitting device may be a Li-Fi transmitter. The optical transmitting device may be configured to use, e.g., G.vlc or OOK (on-off keying) as a physical layer for the optical transmission of the outgoing data. In some embodiments the optical transmitting device is comprised by an optical transceiver such as a LiFi transceiver. In this case, the second function may also comprise transferring optically received data to the electronic controller.

The sensor device may be a wireless sensing device, e.g. an optical, radio or infrared sensing device. In the case of an optical sensing device, this may comprise for example a camera, lidar sensor or Li-Fi data receiver. In the case where the sensor device comprises a LiFi receiver, this means the first function comprises comprise the transferring of the optically received data to the electronic controller.

The cable infrastructure may comprise an Automotive Ethernet, A-PHY infrastructure, or any other suitable physical-layer technology for cable-based communications. The cable infrastructure may comprise a single cable comprising one or more wires, or a network of cables. In some cases, the cable infrastructure may comprise a network of cables using a combination of technologies, such as Automotive Ethernet and A-PHY, in different parts of the network.

The vehicle could be any type of vehicle, such as a road vehicle (e.g. car or truck), railway vehicle, waterborne vehicle (e.g. boat or submarine) or airborne vehicle (e.g. aeroplane or helicopter).

Preferably the cable infrastructure is used a greater amount of time for the first function, of sensing, when the vehicle is moving at a greater speed compared to when at a lesser speed. E.g. the cable infrastructure may be used a greater amount of time for the first function when the vehicle is moving compared to when stationary (a speed of zero).

For instance in embodiments, the interface is configured such that the performance of said selection in dependence on the state of motion of the vehicle (22) comprises: using the cable infrastructure (8) for the second function but not the first function when the vehicle is stationary, and/or using the cable infrastructure for the first function but not the second function when the vehicle is moving.

For example, the cable infrastructure and optical transmitter may be used to offload data to a base station only when the vehicle is stationary, and/or the cable infrastructure and sensing device may be used to sense data from the surroundings of the vehicle or the vehicle itself when the vehicle is moving.

In embodiments the interface may be configured to use the cable infrastructure for the first function (sensing) only when the vehicle is moving and for the second function (optical transmission) only when the vehicle is stationary.

In alternative embodiments, the interface is configured such that the performance of said selection in dependence on the state of motion of the vehicle comprises: using the cable infrastructure on a time-shared basis for both the first function and the second function while the vehicle is moving, but adapting the time spent used for the first function relative to the second function in dependence on a speed of the vehicle.

E.g. when the vehicle is moving at a higher speed the cable infrastructure may be used for the first function (sensing incoming data) for a higher proportion of time relative to the second function (transferring data to the optical transmitter for optical transmission), compared to when the vehicle is moving at a lower speed when the cable infrastructure may be used for the first function for a lesser proportion of the time relative to the second function. For instance while at higher speeds it may be more critical to devote more of the cable infrastructure to sensing functions, and/or it may be less viable to establish a stable optical (e.g. LiFi) link.

A combination of approaches is also possible: the cable infrastructure could be used only for the second function when the vehicle is stationary, but be shared between the first and second functions on a time-shared basis when the vehicle is moving; or vice versa, the cable infrastructure could be used only for the first function when the vehicle is moving and shared between the first and second functions when stationary.

In the cable infrastructure is configured to use a same baseband modulation, for the transfer of the outgoing data from the electronic controller (2) to the optical wireless transmitting device, as used by the optical wireless transmitting device for the optical transmission of the outgoing data.

By using the same baseband for the cable infrastructure as for the optical communications, this advantageously further simplifies the amount of additional infrastructure needed to incorporate optical data communications into a vehicle.

In embodiments the cable infrastructure may be configured to provide a symmetrical data transfer rate for the first and second functions. Alternatively the cable infrastructure may be configured to provide an asymmetrical data transfer rate for the second function compared to the first function.

According to another aspect disclosed herein, there is provided a vehicle (e.g. road vehicle, railway vehicle, airborne vehicle or waterborne vehicle) incorporating the system according to any embodiment disclosed herein.

According to another aspect disclosed herein there is provided a method of operating a system on board a vehicle, the method comprising steps corresponding to the operations of the system of any embodiment disclosed herein. According to another aspect disclosed herein there is provided a computer program embodied on non-transitory computer-readable storage, the program comprising code configured on one or processors to operate the system of any embodiment disclosed herein.

### BRIEF DESCRIPTION OF THE DRAWINGS

To assist understanding of embodiments of the present disclosure and to show how such embodiments may be put into effect, reference is made, by way of example only, to the accompanying drawings in which:
Fig. 1 is a schematic block diagram of a system in accordance with the present disclosure;
Fig. 2 is a schematic block diagram of an example implementation of the system in accordance with embodiments disclosed herein;
Fig. 3 is a schematic illustration of an example link between a LiFi offload station and a modern digital vehicle in accordance with embodiments disclosed herein, with the LiFi interface in the driver wing mirror;
Fig. 4 is a schematic illustration of another example of a link between a LiFi offload station and a modern digital vehicle in accordance with embodiments disclosed herein, with the LiFi interface integrated into the vehicle floor;
Fig. 5a is a schematic circuit diagram of a LiFi interface for modern digital vehicles based on G.vlc, for use with Automotive Ethernet, in accordance with an embodiment disclosed herein;
Fig. 5b is a schematic circuit diagram of a LiFi interface for modern digital vehicles based on G.vlc next generation, for use with Automotive Ethernet, in accordance with an embodiment disclosed herein;
Fig. 6 is a schematic circuit diagram of a LiFi interface for modern digital vehicles based on OOK (on-off keying), for use with Automotive Ethernet, in accordance with an embodiment disclosed herein;
Fig. 7 is a schematic circuit diagram of a LiFi interface for modern digital vehicles based on G.vlc, for use with A-PHY, in accordance with an embodiment disclosed herein;
Fig. 8 is a schematic circuit diagram of a LiFi interface for modern digital vehicles based on OOK with SGMII (Serial Gigabit Media-Independent Interface), for use with A-PHY, in accordance with an embodiment disclosed herein;
Fig. 9 is a schematic circuit diagram of a LiFi Interface for modern digital vehicles based on OOK with a switch, for use with A-PHY, in accordance with an embodiment disclosed herein;
Fig. 10 is a schematic circuit diagram of a LiFi interface for modern digital vehicles based on OOK with 2/4 hybrid wire converter, for use with A-PHY, in accordance with an embodiment disclosed herein; and
Fig. 11 schematically illustrates a symmetric configuration according to A-PHY specification v1.1.

### DETAILED DESCRIPTION OF EMBODIMENTS

The present disclosure provides a system and method for light-based (e.g. LiFi) based data offload for modern digital vehicles. Particularly, the disclosure relates to the integration of an optical (e.g. LiFi) interface to an in-vehicle cable infrastructure, such as an Ethernet bus.

The in-vehicle cable infrastructure is configured to carry out two functions on a time-sharing basis: collecting data from in-vehicle sensors (e.g. camera) and data-off loading via optical wireless communication (OWC) wherein the time scheduling is dependent on the status of the vehicle: driving or static.

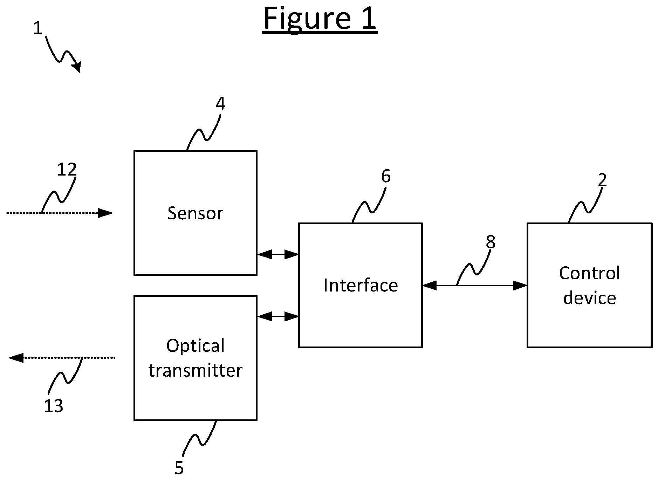

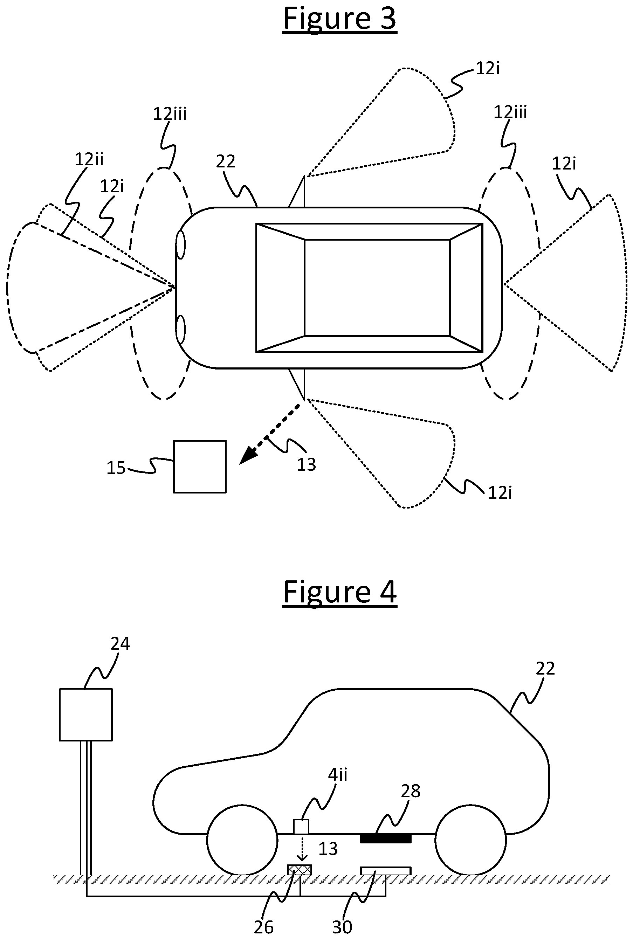

Figure 1 shows a system 1 suitable for being incorporated into a vehicle 22 in accordance with the present disclosure (examples of vehicle 22 shown in Figures 3-4). The vehicle 22 may be a passenger vehicle or an unoccupied vehicle. It may take the form of a road vehicle such as a car or truck; or a railway engine or train; or a waterborne vehicle such as boat, ship or submarine; or an airborne vehicle such as a plane or helicopter. It may be a manually controlled vehicle, or an autonomous vehicle, or a hybrid vehicle capable of either manual or autonomous operation.

The system 1 comprise an electronic controller 2 of the vehicle. The controller 2 may for example take the form of a CCN (central communications node), or a domain ECU (electronic control unit), or a subsystem comprising a combination of these and/or other electronic units. The controller 2 may be implemented in the form of dedicated, fixed function hardware; or one or more processors along with memory storing code arranged to run on the one or more processors; or a combination of software and dedicated hardware.

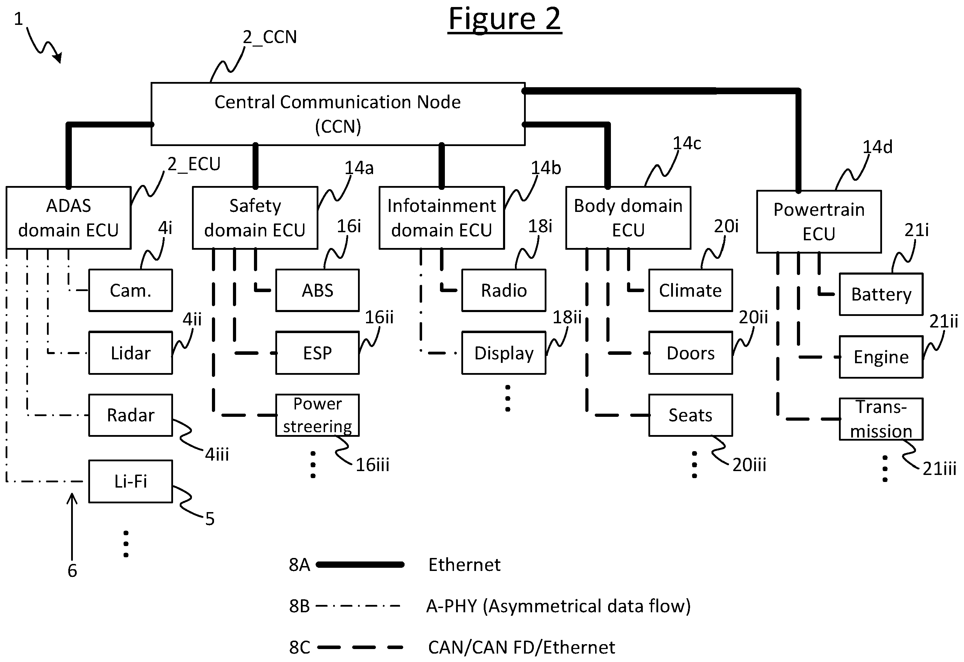

The system 1 further comprises: one or more sensing devices 4, one or more optical (i.e. light-based) transmission devices 5, an interface 6, and a cable infrastructure 8.
The controller 2 is connected to the interface 6 by the cable infrastructure 8. I.e. a first end of at least one cable of the cable infrastructure 8 is connected to the controller 2, and a second end of the cable is connected to the interface 6. The cable infrastructure 8 may comprise a single cable or a network of cables. In embodiments it may comprise a network with other cables connecting the controller 2 to other components 14 within the vehicle (e.g. as shown in Figure 2). Each cable may comprise one or more wires, e.g. a pair of wires. The cable infrastructure 8 may for example be configured to use Automotive Ethernet or A-PHY as a physical layer protocol. According to the present disclosure, at least a part of the cable infrastructure 8 connecting between the interface 6 and the controller 2 comprises at least one cable arranged to operate on a time-division multiplexed shared (e.g. half-duplex) basis between the controller 2 and the interface 6. That is to say, it is used to convey different data at different times (and in embodiments in only one direction at any one time). In embodiments the part of the cable infrastructure 8 between the controller 2 and interface 6 is only capable of half-duplex communication. In embodiments only a single cable 8 is provided between the controller 2 and the interface 6, and it is used on this time-shared basis.

The interface 6 comprises a switch and associated local control logic operable to connect the controller 2, via the cable infrastructure 8, either to the optical transmitter 5 or to at least one of the one or more sensor devices 4. That is, the interface selectively couples the second end of the at least one time-division multiplexed (e.g. half-duplex) cable of the cable infrastructure 8 to either i) at least one of the one or more sensing devices 4, or ii) at least one of the one or more optical transmission devices 5. The logic of the interface 6 may be implemented in dedicated hardware circuitry, or one or more suitably programmed processors, or a combination of hardware and software.

When connected to the optical transmitter 5, the controller 2 may send outgoing data over the cable infrastructure 8 to the optical transmitting device 5, causing the data to be transmitted from the optical transmission device 5 in optical form to a receiving device internal or external to the vehicle 22. For example the receiving device (e.g. element 15 in Figure 3 or 26 in Figure 4) may be comprised by a base station to which the vehicle offloads data, such as data it has collected while driving (or travelling). In some cases the base station may upload the data to one or more servers, e.g. via the internet ("to the cloud").

The optical transmitter 5 comprises a light emitting element such as one or more LEDs (light emitting diodes), lasers, or filament bulbs, etc.; and any associated driver circuitry. The means of optical transmission employed by the optical transmission device 5 may comprise a visible light based medium, an infrared medium or an ultraviolet communication medium. In embodiments visible light is used. E.g. a LiFi protocol may be used. The physical layer protocol for LiFi or other light-based communications may comprise, for example, G.vlc or on-off keying (OOK). In some embodiments the optical transmission device 5 may in fact take the form of an optical transceiver, e.g. LiFi transceiver, capable of both transmitting and receiving optical data.

The one or more sensing devices 4 may comprise any one or more sensors such as radio sensors, light sensors, temperature sensors, contact sensors, accelerometers, force or torque sensors, etc. The one or more sensing devices 4 may comprise one or more sensors for sensing an internal condition of the vehicle 22, such as a cabin temperature, engine temperature, fuel level, or whether a door is open. Alternatively or additionally, the one or more sensing devices 4 may comprise one or more wireless sensing devices for sensing externally to the vehicle 22. Such wireless sensing devices 4 may comprise, for example, one or more devices for detecting or measuring one or more properties of the surroundings of the vehicle, e.g. a distance sensor or ranging sensor such as radar or lidar sensor. Alternatively or additionally, the one or more wireless sensing devices 4 may comprise one or more cameras. As another alternative or additional option, the one or more wireless sensing devices 4 may comprise one or more communication receiving devices such as a radio receiver. Note therefore that "sensing" as used herein does not limit to simple telemetry or measurement of simple quantities such as distance to an obstacle, and does not exclude imaging or communications.

The one or more sensing devices 4 may employ any suitable medium for their function. E.g. the one or more sensing devices 4 may comprise one or more visible-light, infrared and/or ultraviolet based optical sensing devices (e.g. camera or Li-Fi receiver), one or more radio based sensing devices (e.g. radar or radio communication receiver), one or more thermal sensing devices, and/or one or more sensing devices based on physical contact (e.g. sensing mechanical or electric contact).

The controller 2 is configured for controlling one or more functions of the vehicle 22. These functions may comprise one or more of: autonomous control of the vehicle; automated regulation one or more subsystems under manual control of a driver (e.g. an ABS subsystem regulating manually controlled brakes, etc.); and/or outputting of information (e.g. speed or distance from an obstacle) to a driver or other user via a user interface (e.g. a dashboard screen or a head-up display, HUD). At least one of these functions is dependent on data sensed via at least one of the one or more sensor devices 4. E.g. the image from a camera may be displayed on the user interface; or the ABS (anti-lock braking system) or power steering may be regulated automatically based on measurements from onboard sensors; or the distance to an obstacle as sensed by a distance sensor may be displayed on the UI, or played out audibly to the driver, or the sensed distance may be used to autonomously control the motion of the vehicle in the case of an autonomous vehicle.

By way of example context, Figure 2 shows one example of a wider system in which the system 1 may be incorporated. The system may comprise a first controller 2_CCN, which may be a central control node (CCN) of the vehicle 22. The system may also comprise one or more second controllers 2_ECU, 14a-14d which may be domain ECUs (electronic control units) responsible for respective control domains. In the example shown the domain ECUs comprise: an ADAS (advance driver assistance) domain ECU (2_ECU), a chassis & safety domain ECU 14a, an infotainment domain ECU 14b, a body domain ECU 14c and a power train domain ECU 14d. The ADAS domain ECU, 2_ECU, is arranged to control one or more ADAS related devices such as one or more cameras 4i, lidar 4ii and/or radar 4iii, as well as the light-based communication device 5 such as a Li-Fi data communications. The chassis & safety domain ECU 14a is arranged to control one or more chassis and/or safety related devices, such as ABS 16i, ESP (electronic stability program) 16ii, power steering 16iii, brakes, and/or the chassis. The infotainment domain ECU 14b is arranged to control one or more information and/or entertainment related devices such as a radio or stereo 18i (e.g. comprising a digital or FM radio, CD player and/or Bluetooth based audio player) and/or a user display 18ii (e.g. dashboard display or HUD). The body domain ECU 14c is arranged to control one or more body related devices such as climate control 20i, door modules 20ii and/or seat modules 20iii. The powertrain domain ECU is arranged to control one or more powertrain related devices as the battery 21i, engine 21ii and/or transmission 21iii. The system may include any one or more such domain ECUs.

The first controller 2_CCN (e.g. central control node) may be connected to each second controller (e.g. domain ECU 14a-d, 2_ECU) by a first cable infrastructure 8A. Each second controller (e.g. domain ECU) may be connected to its respective local devices by a second cable infrastructure 8B or a third cable infrastructure 8C. The first controller 2_CCN coordinates the operation of the second controller(s) 2_ECU, 14a-d via the first cable infrastructure 8A, and the second controller(s) report back to the first controller via the first cable infrastructure 8A. Each second controller 2_ECU, 14a-d is arranged to control its respective devices and/or receive back data from its respective devices via the second cable infrastructure 8B or third cable infrastructure 8C, depending on which connects each one. E.g. the first cable infrastructure 8A may be an Automotive Ethernet infrastructure, the second cable infrastructure 8B may be an A-PHY based infrastructure, and the third cable infrastructure 8C may be a CAN (control area network) or CAN FD (flexible data rate) infrastructure or another Ethernet infrastructure.

In such an arrangement, the light-based communication (e.g. LiFi) device 5 and at least one other sensor device 4i-4iii is connected to a respective one of the one or more second controllers 2_ECU via the second cable infrastructure 8B.

In the particular example shown the camera 4i, radar 4ii, lidar 4iii and LiFi 5 are connected to the ADAS domain ECU 14a via the second cable infrastructure (e.g. A-PHY); the chassis and safety related devices 16i-iii are connected to the chassis & safety domain ECU 14b via the third cable infrastructure 8C (e.g. CAN); the radio/stereo 18i is connected to the infotainment domain ECU 14c via the third cable infrastructure 8C while the display 18ii is connected to the infotainment domain ECU 14c via the second cable infrastructure 8B; the body related devices 20i-iii are connected to the body domain ECU 14c via the third cable infrastructure 8C; and the powertrain related devices 21i-iii are connected to the powertrain domain ECU 14d via the third cable infrastructure 8C.

In such examples, the controller 2 described in relation to Figure 1 may be considered to be the local second controller 2_ECU (e.g. ECU, such as the ADAS domain ECU) and the cable infrastructure 8 described in relation to Figure 1 may be considered to be the second cable infrastructure 8B. Alternatively the controller 2 described in relation to Figure 1 may be considered to be the first controller 2_CCN (e.g. central control unit, CCN) and the cable infrastructure 8 described in relation to Figure 1 may be considered to be a network comprising the first and second cable infrastructures 8A, 8B and associated ECUs. Either way the interface 6 sits between the second cable infrastructure 8B and the sensor devices 4i-iii and light-based transmitter device 5.

Data offload may take place via an (Automotive) Ethernet- or A-PHY interface and that the LiFi interface must be connected to one of these technologies depending on the use case and required bitrates. LiFi has a potential role for in-vehicle communication or external communication. For example LiFi can be used to replace cellular connections ("3G-5G") during charging stops. 3G-5G as well as RF based WiFi connections do not provide the needed bandwidth for high-speed data download applications and in particular not in situation when many cars are parked close to each other in a parking garage/charging station.

In embodiments, the in-vehicle communication bus collects the data from sensors 4 in a distributed manner. Given that the controller 2 (as indicated in Figure 1) can either be the Central Communication Node (CCN) or the domain ECU (based on the Figure 2 depiction), then there are at least two possibilities to implement the "interface" 6. In the case where the controller 2 is the CCN, then the interface 6 in this case may be comprised by the domain ECU. In this case the time-sharing, etc., may be controlled directly by the CCN. Alternatively or additionally, in the case where the controller 2 is the domain ECU, then the interface 6 may be implemented as part of the optical interface. In this case the control for the time-sharing may be managed by the domain ECU, either based on central command relayed from the CCN or a locally made decision in the domain ECU.

It will be appreciated that the particular system of Figure 2 is just one example arrangement given by way of exemplary context.

Regardless of the particular context in which the system 2 is implemented, and returning by way of reference to the more general representation of Figure 1, the interface 6 is arranged to schedule the use of the cable infrastructure 8 on a time-shared basis; shared between being used, on the one hand, for i) conveying incoming data from the sensor device(s) 4 to the controller 2, and on the other hand for ii) conveying outgoing data from the controller 2 to the light-based (i.e. optical) transmitter 5 to be emitted from the transmitter 5 via whatever light-based communication technology it employs (e.g. LiFi). Put another way the data destined for the optical transmitter 5 is time-division multiplexed over the same cable or cables as the data from the sensor device(s) 4. In embodiments, the interface 6 may operate the communications over the at least one cable 8 between the controller 2 and sensor & transmitter devices 4, 5 on a half-duplex basis. I.e. the cable 8 in question may be used for communications in only one direction at any one time, either for sensing of incoming data or transmission of outgoing data, but not both at the same time. In embodiments only a single time-division multiplexed (e.g. half-duplexed) cable 8 is provided between the controller 2 on the one side and the sensor device(s) 4 & optical transmitter 5 (via the interface 6) on the other side. E.g. the cable 8 may comprise a single pair of wires only suitable for communication on one direction at a time.

In the example shown in Figure 2 some of the devices such as the chassis & safety devices 16i-iii, body devices 20i-iii and powertrain devices 21i-iii are in a different domain than the optical (i.e. light-based) transmitter 5 and hence their data is not multiplexed over the same cables of the same cable infrastructure 8B via the interface 6; but in alternative embodiments any one or more such devices or others could be incorporated within the domain of the multiplexing interface 6 and have their data multiplexed over the same cable(s) 8.

The optical transmitter device 5 may be co-located with one, more or all of the one or more sensors 4 that share the same cable(s) 8 of the cable infrastructure. Alternatively they need not be co-located, in which case some additional wiring is needed between one or more of the devices 4, 5 and the interface 6.

Note that the blocks 4 and 5 in Figure 1 do not necessarily represent a division into separate physical units. Rather, they represent a grouping of different functions for the purpose of time scheduling over the cable infrastructure 8. If the system comprises an optical data transceiver (e.g. LiFi transceiver) comprising both an optical data transmitter and an optical data receiver, then the optical data receiver could be considered to be comprised by the sensor(s) 4 or the optical transmission device 5 depending on how the incoming data is scheduled to be transferred to the controller 2 over the cable infrastructure 8.

Figure 3 shows one example where the optical transmitter device 5 is collocated within the vehicle 22 with at least one sensor device 4 with which it shares the interface 6 and cabling 8. Here the sensor device 4i takes the form of a camera, and the incoming image data from camera 4i to controller 2 time-shares the same cable or cables 8 as the outgoing data from the controller 2 to the optical transmitter 5. E.g. the sensor 4i and optical transmitter 5 may be both located in a wingmirror unit of the vehicle 22. In another example the optical transmitter device 5 could be collocated with a camera 4i elsewhere in the vehicle, or with a lidar device 4ii or radar device 4iii, and could share an interface 6 and cable(s) 8 with any such devices. By way of illustration, Figure 3 schematically shows some example sensing fields 12i of some onboard cameras 4i of the vehicle 22, an example sensing field 12ii of a lidar device 4ii, and some example sensing fields 12iii of front and rear radar devices 4iii.

Wherever located, the data transferred to the optical transmitter 5 is transmitted internally to or externally from the vehicle using the relevant light-based communication technology (e.g. LiFi employing G.vlc or OOK at the physical layer). A schematic representation of the optical channel is labelled with numeral 13 in the figure. The data may be transmitted for example to a base station 15, or to another vehicle (not shown). In the case of transmitting to a base station 15, this may be used to offload data on the current status of the vehicle or its past performance or driving history since the past time it offloaded. Such offloaded data could be forwarded by the base station 15 to the cloud, e.g. for analysis (such as diagnostics) or record keeping. In the case where the light-based data is transmitted to another vehicle, this could be used to exchange data further purpose of coordinated autonomous driving of the two vehicles, such as to "platoon" together two or more vehicles in convoy. As another example, the optical transmitter device 5 could be used to provide in-vehicle communication, rather than necessarily transmitting externally.

Figure 4 shows another example scenario, this time where the optical transmitter device 5 is not necessarily co-located with one of the other sensor devices 4 (but still shares an interface 6 and cable 8 for at least part of the route to the controller 2, e.g. being situated near a sensor on the chassis). Here the optical transmitter device 5 is situated on the underside of the vehicle and arranged so that when the vehicle 22 is parked in a charging station 24, 26, 30 then the vehicle 22 will also offload data. The charging station comprises: a user facing unit 24, a power source resonator 30 which will charge the battery of the vehicle via a corresponding power capture resonator 28 on the underside of the vehicle 22, and an optical receiver device 26 which receives the light-based data transmission from the optical transmitter device 5. It will be appreciated that this is just one possible configuration of a charging and data-offload station.

More generally, the optical transmitter 5 could be used for any in-vehicle or extra-vehicle transmission of data, such as to a user device in the vehicle 22, a base station 15 or 24, 26 external to the vehicle, another vehicle in the vicinity, or any other receiving system comprising a suitable optical receiver.

Whatever the data is to be used for, according to the present disclosure the interface 6 is configured such that the time sharing of the shared cabling 8 is adapted based on state of motion of the vehicle 22. The interface 6 may be configured to perform this autonomously, or under control of another component such as the controller 2 or a local controller (not shown) that is in wired or wireless communication with the interface 6.

Preferably the time-shared cabling 8 (i.e. the one or more time-shared cables in the relevant part of the cable infrastructure 8 between interface 6 and controller 2) is used for a greater proportion of the time for sensing (sending sensing data from sensing device 4 to the controller 2) when the vehicle 22 is moving at a higher speed compared to when at a lower speed. This means the shared cabling 8 may be used for optical data transmission (sending data from the controller 2 to the optical transmitter device 5) for a greater proportion of the time when the vehicle is at a lower speed compared to when moving at a higher speed. Depending on implementation, the lower speed could be zero (stationary), or a non-zero speed that is lower than the higher speed.

In embodiments the interface 6 is configured to use the shared cabling 8 only for communication in one direction, from sensor device(s) 4 to controller 2, when the vehicle 22 is moving; and to use it only for communication in the other direction, from controller 2 to the optical transmitter device 5, when the vehicle 22 is stationary. This scheme may be employed for example so that the vehicle (e.g. road vehicle) uses the cable infrastructure 8 for its sensing functionality when driving, but re-uses the same cabling infrastructure 8 to offload data (e.g. to base station 15 or 24/26) via optical communication when stationary, such as when parked or in a charging station. For instance the data may comprise data on the vehicle's performance or driving history, or other status information, as collected during the period from last data offload up to time it stopped for the current offload. E.g. the data may be forwarded from the base station via a network such as the internet or a mobile cellular network to a server comprising one or more server units ("the cloud") where it may be logged and/or analysed, such as to detect performance issues.

In a variant of the above, the interface 6 may use the shared cabling 8 only for communication in one direction, from sensor device(s) 4 to controller 2, when the vehicle 22 is moving; but may use the shared cabling 8 on a time-shared basis for the communications in both directions, from sensor device(s) 4 to controller 2 and from controller 2 to optical transmitter device 5, when the vehicle 22 is stationary. Alternatively the interface 6 may use the shared cabling 8 on a time-shared basis for the communications in both directions, from sensor device(s) 4 to controller 2 and from controller 2 to optical transmitter device 5, when the vehicle 22 is moving; but may use the shared cabling 8 only for communication in one direction, from controller 2 to optical transmitter device 5, when the vehicle 22 is stationary. Or as another alternative, the interface 6 could use the shared cabling 8 on a time-shared basis for both type of communication in both directions, from sensor device(s) 4 to controller 2 and from controller 2 to optical transmitter device 5, both when the vehicle 22 is moving and stationary, but when the vehicle 22 is moving compared to when stationary the interface 6 may use the shared cabling 8 for the transfer of the incoming sensed data from sensor device(s) 4 to controller 2 for a greater proportion of time than for the transfer of the outgoing data from controller 2 to optical transmitter device. Or the interface 6 could use the shared cabling 8 on a time-shared basis for both type of communication in both directions, from sensor device(s) 4 to controller 2 and from controller 2 to optical transmitter device 5, when the vehicle 22 is moving (irrespective of what the cabling 8 is used for or whether used at all when stationary); and when the vehicle is moving at a higher speed to speeds the interface 6 may increase the proportion of time for which it uses the shared cabling 8 for the transfer of the incoming sensed data from sensor device(s) 4 to controller 2 compared to the transfer of the outgoing data from controller 2 to optical transmitter device 5, the proportion being increased relative to the proportion when the vehicle is moving at a lower (but non-zero) speed or speeds.

By way of example, the vehicle 22 could be a road vehicle or a railway vehicle. Above a certain speed the optical transmitter 5 may not be used, as establishing a connection to a receiving device (e.g. 15 or 26) may not be viable above a certain speed. However as the vehicle slows, e.g. as the road vehicle draws into a parking space or docking station such as a charging station, or as the railway vehicle pulls into a railway station, then the vehicle 22 may begin to use the optical transmitter 5 to establish an optical connection with a receiving device located in the space or station and begin data offload as the vehicle begins to slow. During this period, at least some sensing functionality may be needed, so the shared cabling 8 may be used on a time-shared basis for both sending incoming data from the sensor device(s) 4 to the controller, and from the controller 2 to the optical transmitter device 5 for transmission to the receiving device (e.g. 15 or 26). When the vehicle 22 is stopped, the cabling 8 could continue to be used for data offload and some minimal sensing, perhaps with a greater proportion of time devoted to offload than when moving, or the use of the cabling 8 could be devoted only to the optical data offload.

As another, alternative or additional example, when the vehicle is moving, potentially at any speed or at least speeds below a certain threshold, then the cabling 8 may be shared between the communications in both directions, incoming sensing and outgoing data for optical transmission; but as the speed of the vehicle 22 increases it may become more critical to increase the rate of sensing data fed to the controller 2, whereas the optical data transmission may be (e.g. being used only for in-vehicle communication to a mobile user terminal, such as for entertainment purposes). Therefore as the speed increases the interface 6 may increase the proportion of time for which the shared cabling 8 is used for sensing compared to optical data transmission.

In another variant, the relative proportion of time allotted to each function may be adapted in dependence on a type of motion of the vehicle, or the speed relative to another vehicle or other moving object. For instance the vehicle 22 may be "platooned" with another vehicle, i.e. in convoy, using light-based communication and/or another wireless communication technology) to coordinate motion with the other vehicle. In that case it may be viable to establish a light-based connection with the other vehicle via the optical transmitter 5, whether for the purpose of the platooning itself (i.e. to coordinate the motion of the two vehicles) or for another, incidental purpose such as communication between the passengers in the different vehicles or sharing analytical data. In this case the cabling 8 may be shared between the functions of sensing and optical data transmission. However when not platooned (not in convoy), the optical transmitter 5 may not be used or may be used to only a lesser extent.

Note again that the boxes 4 and 5 in Figure 1, representing the sensor(s) and optical transmitter respectively, do not necessarily represent a division into separate physical units. Rather, they represent a grouping of different functions for the purpose of time scheduling of their signals over the cable infrastructure 8. For instance in embodiments, the system 1 may comprise an optical data transceiver, e.g. LiFi transceiver, capable of both transmitting and receiving data in optical form (e.g. based on a LiFi protocol). In some such embodiments, the receive path of the optical data transceiver may be treated as as one of the sensors 4, meaning that the use of the cable infrastructure 8 for receipt of data via the optical path is scheduled as a different function of motion of the vehicle 22 than for optical transmission via the optical transmitting device 5. Alternatively the optical transceiver may be described as an example of the optical transmitting device 5, meaning that the use of the cable infrastructure 8 for receipt of data via the optical path is scheduled on the same basis as for transmission. E.g. in the former case, the cable infrastructure 8 may be used only for receiving incoming data from the LiFi receive path, and optionally other sensors 4, when the vehicle is moving; whereas the cable infrastructure 8 may be used only for sending data for optical transmission via the LiFi transmit path 5 when the vehicle is stationary. Alternatively the cable infrastructure 8 may be used only for receiving incoming data from other sensors 4 when the vehicle is moving, whereas the cable infrastructure 8 may be used for transmitting and receiving data to/from the LiFi transceiver 5 when the vehicle is stationary.

As a further optional feature, which may be used in conjunction with any of the variants described above, the cable infrastructure 8 (at least the relevant part between the controller 2 and interface 6) may be arranged to use a same baseband modulation scheme as the optical transmitter device 5 uses for its optical (i.e. light-based) communications. This means the controller 2 is configured to modulate data onto a suitable baseband for transmission over the cable infrastructure 8 to the interface 6, and the interface 6 and optical transmitter device 5 does not need to demodulate and remodulate the signal for transmission over the optical channel 13.

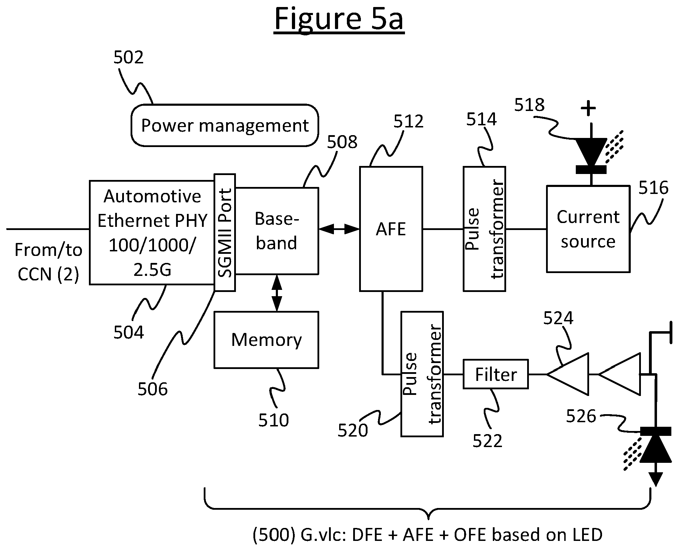

Some particular example implementations of the above-described concepts are now disclosed with reference to Figures 5a to 11.

To realize such LiFi connections between a modern digital vehicle and the LiFi based data offload station for different in-vehicle communication technologies, Automotive Ethernet and/or A-PHY may be used as in-vehicle communication technologies. The position of the LiFi interface can be chosen based on different requirements and the particular location is not essential. For example, a sensor pod is also a suitable location for installing a LiFi interface. Also, the 2-wire in-vehicle cable infrastructure can be used multiple times. For example, with a camera, the data may be only transmitted in the DL (downlink) direction (to the domain ECU) and only when the vehicle is moving. However, the data for a LiFi interface transmits in the UL (uplink) direction and may be transmitted only when the vehicle is in the parking or charging position and when the LiFi interface communicates with an offload station. This means that the 2-wires between the domain ECU and the camera or the LiFi interface can be used at different times. For such an infrastructure sharing implementation, switches at the respective ends of the two wires will be put in place.

Embodiments may employ Automotive Ethernet. The data source interface for Automotive Ethernet, for instance in central communication node - CCN, is 100BASE-T1, 1000BASE-T, 2,5GBASE-T1, 5GBASE-T1 or 10GBASE-T1. For a LiFi connection to the LiFi offload station the Automotive Ethernet signals ("T1" signals) may be adapted for the LiFi channel. Two LiFi technologies can be used: G.vlc and OOK. G.vlc is orthogonal frequency-division multiplexing, OFDM, based, where the downlink/uplink ratio is flexible; with point-to-point, P2P, as a special case of point-to-multi-point, P2MP. It operates over some ten of meters, with one or more LEDs as the source). OOK is P2P, operating over some tens of centimetres, with a laser as the source).

One option is Automotive Ethernet with G.vlc. Figure 5a shows a possible realisation for a LiFi interface for modern digital vehicles based on G.vlc. Subsystem 500 in Fig. 5a forms a G.vlc front-end and is an example implementation of the block 5 in Fig. 1. The G.vlc front-end 500 is connected to an Automotive Ethernet PHY 100/1000/2.5G infrastructure 504 which may be an implementation of the cable infrastructure 8 and connects to the CCN. The G.vlc front-end 500 comprises a digital baseband block 508 which provides a digital front-end, connecting to the Automotive Ethernet infrastructure 504 via a SGMII port 506. The G.vlc front-end 500 also comprises a memory 510 coupled to the baseband block 508, which may supply code and/or values for operating the baseband block 508. The G.vlc front-end further comprises an analogue font-end (AFE) processor 512 connected to the baseband block 508; an LED 518 connected to the AFE 512 via a current source (driver) 516 and pulse transformer 514; and a photodiode 526 connected to the AFE via a power amplifier 526, filter 522 and pulse transformer 520. The pulse transformers 514 and 520 are optional.

As shown in Figure 5a, an Automotive Ethernet PHY is used to convert the 2-wire T1 signal connected to the CCN for instance by SGMII (if 100BASE-T1 or 1000BASE-T1 is used - but can be also used for 2.5GBASE-T1). The actual interface type is not of great relevance. The Automotive Ethernet PHY and the G.vlc baseband chip (DFE) use the same interface types in order to avoid additional adjustments.

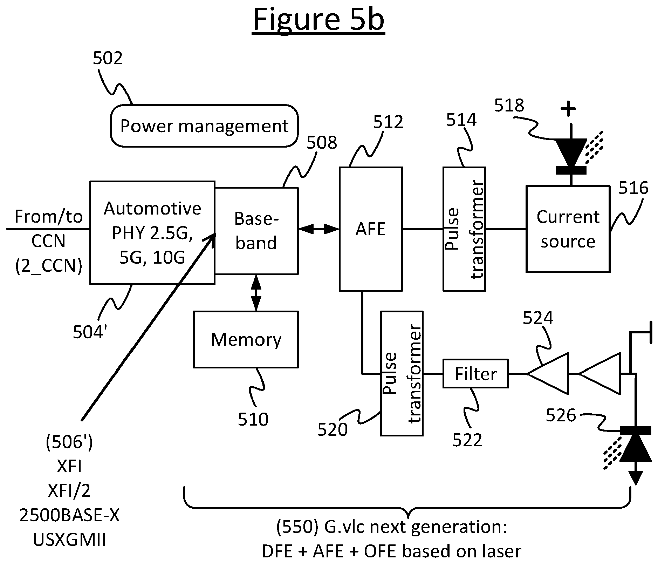

The G.vlc solution shown in Figure 5a is applicable for 100BASE-T1 and 1000BASE-T1. For some applications also 2.5GBASE-T1 can be used. For 2.5GBASE-T1, 5GBASE-T1 and 10GBASE-T1 "G.vlc next generation" would be a good opportunity as shown in Figure 5b. The arrangement shown in Figure 5b is the same as in Figure 5a, except the infrastructure 504 connecting from the CCN becomes an Automotive PHY 2.5G, 5G or 10G infrastructure 504', and the interface 506 is replaced with a XFI, XFI/2, 2500BASE-X or USCGMII (506'). The front-end 550 is the same as that (500) shown in Figure 5a, except it now provides G.vlc next generation DFE + AFE + OFE based on laser communication instead of LEDs and new DFE and AFE.

Another option is to use Automotive Ethernet with OOK (On-Off-Keying).

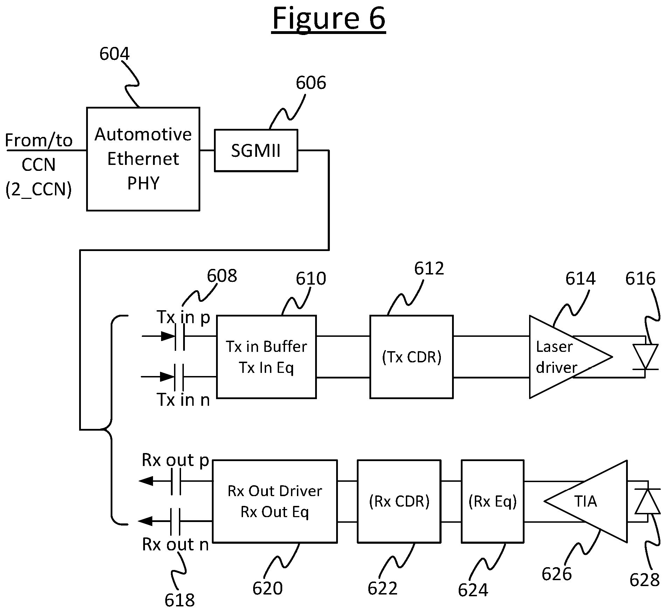

Figure 6 shows and example implementation of a LiFi interface based on OOK for use with Automotive Ethernet. The circuit of Figure 6 includes an Automotive Ethernet PHY infrastructure 604 connecting to the CNN, and a SGMII interface 606, - which couples to the optical transceiver consisting of a transmit (Tx) path and an receive (Rx) path. The Tx path comprises a transmit driver 610 (with or without equalizer), Txin Buffer, Txin Eq - 610; an optional clock data recovery unit 612; a laser driver 614; and an optical transmit element (616). The optical Rx path comprises optical receiving element 628, a transimpedance amplifier 626, an optional receiving equalizer 624, and optional clock and data recovery unit 622, and a receiving driver and optional receiving equalizer 620. The input and output lines labelled TX in p, Tx in n (608) and Rx out p and Rx out n (618) represent positive and negative pairs from the SGMII 606.

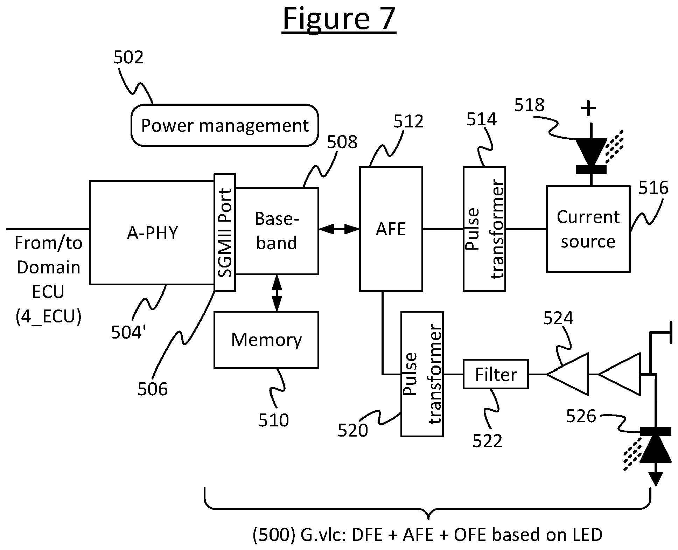

Figure 7 shows an example implementation of a LiFi interface based on G.vlc for use with an A-PHY infrastructure 504', which connects from a domain ECU rather than the CCN. The block 508 again represents a baseband digital front-end (DFE).

OOK is known from optical fibres as well as optical wireless. It can also be used for LiFi applications and has a higher SNR when compared to higher level modulation schemes. However, it has also some limitations such as adaptive bit loading.

A difference between Automotive Ethernet and A-PHY is that data traffic is mainly viewed as asymmetrical and symmetrical data traffic is more a special case. This is due to the fact that A-PHY was developed for specific applications with asymmetrical data traffic like data transmission from cameras (CSI-2) or data transmission to displays (DSI-2). In these cases, in the respective opposite direction only control data with low bitrates are transmitted. As a consequence of the vastly different UL/DL bit rates, lasers do not necessarily have to be used as transmitters for the lower speed/data rate traffic and less expensive LED transmitters can also be used. A-PHY also supports standard third-party protocols.

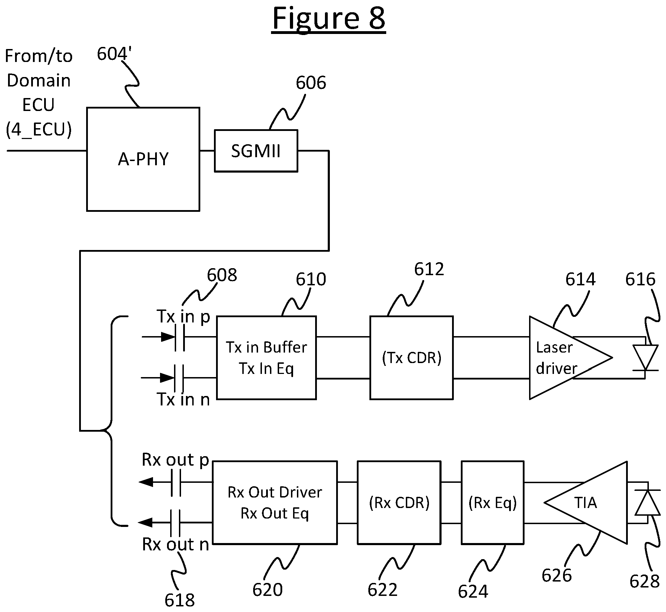

Another option is to use symmetrical A-PHY with OOK and SGMII (Serial Gigabit media-independent interface). This is shown in Figure 8, and uses the same approach as described in relation to Figure 6. Figure 8 is the same as Figure 6, except that the cable infrastructure 604 is now an A-PHY infrastructure 604' and connects from a domain ECU rather than the CCN.

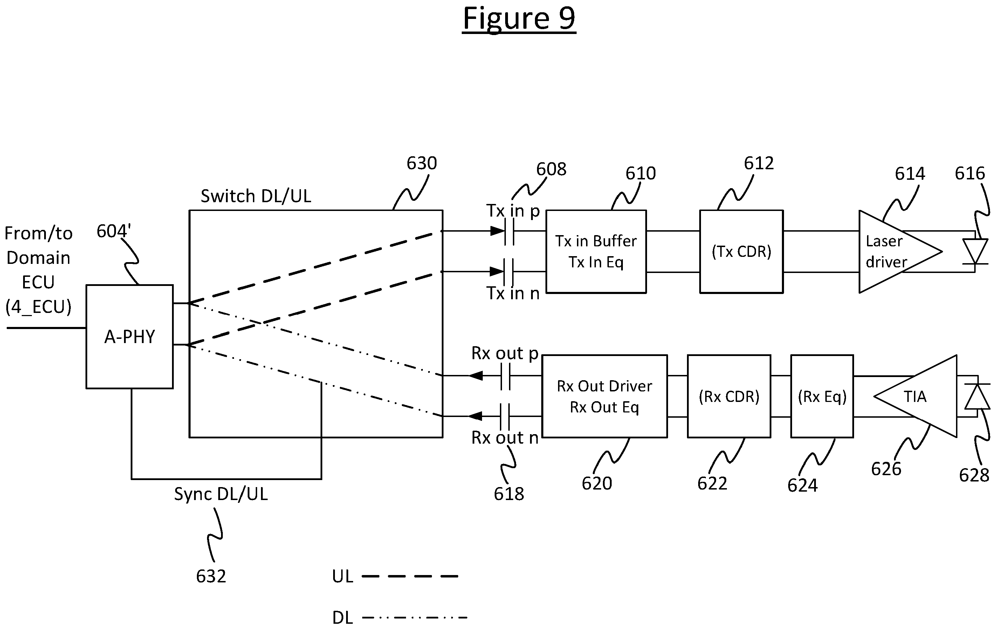

As shown in Figure 9, another option is to use asymmetrical A-PHY with OOK and a DL/UL (downlink/uplink) switch 630. Figure 9 is the same as Figure 8, except that the SGMII interface 606 is replaced with switch 630 that is synced based on information 632 about the ratio between downlink (DL) and uplink (UL). Information about the ratio between DL and UL should be available from the A-PHY (604'). This information is used to switch the 2-wire A-PHY interface 630 accordingly to the optical transmitter (Tx) or Receiver (Rx). For the transmission of UL signals the A-PHY output is connected to the optical Tx.

Another option is to use symmetrical A-PHY with G.vlc. There are A-PHY solutions available that can be used in the symmetrical mode over the Automotive Ethernet infrastructure (T1 wires). An Automotive 100BASE-T1 cable infrastructure can transmit 1.5 Gbps DL and UL traffic using A-PHY technology. An Automotive 1000BASE-T1 cable infrastructure with A-PHY technology can transmit 2 Gbps DL and UL traffic. Both Automotive Ethernet technologies can reach bitrates that theoretically support G.vlc. A-PHY can also be combined with next generation G.vlc, as explained above for Automotive Ethernet.

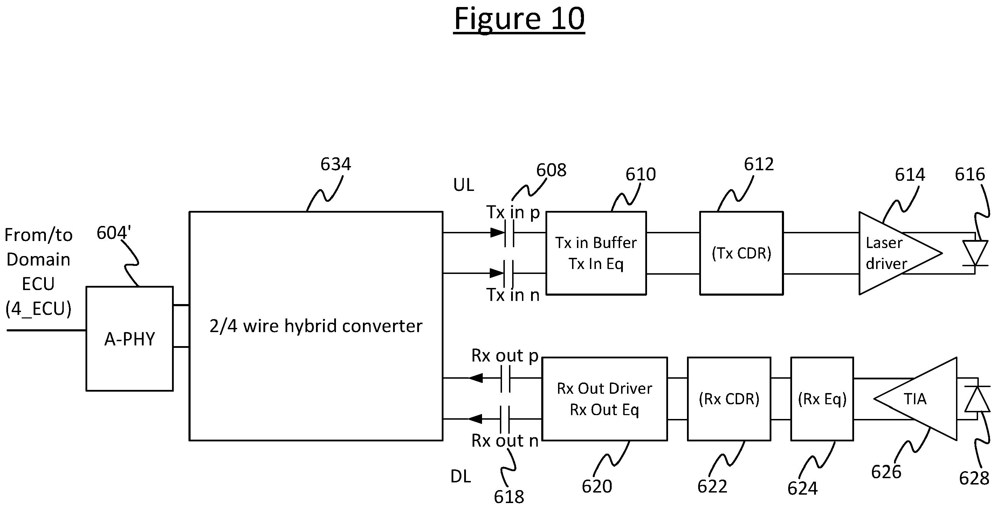

Another option is to use symmetrical A-PHY with OOK, with a 2/4 wire hybrid converter. For optical transmission of A-PHY signals according to the A-PHY specification V.1.0, a scheme as shown in Figure 10 can be used. Figure 10 is the same as Figure 8, except that the SGMII interface 606 is replaced with a 2/4 wire hybrid converter 634. The 2/4 wire hybrid converter is used to split the signals at the 2-wire A-PHY interface into DL (Tx 2 wires) and UL (Rx 2 wires).

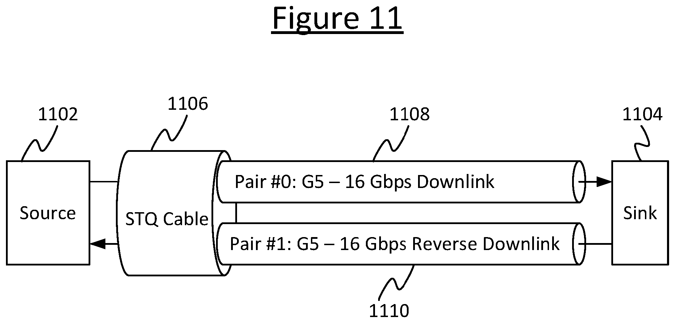

For a symmetric configuration according to the A-PHY specification v1.1, the A-PHY can have two 2-wire interfaces (one 2-wire interface for Pair #01 and another 2-wire interface for Pair #1. See Figure 11, where a source 1102 is connected to a sink 1104 via a STQ cable 1106, comprising a first pair #0 (1108) and a second pair #1 (1110). The source 1102 is the controller 2 and the sink 1104 is the interface 6 in an implementation of Figure 1. Pair #0 may provide a G5 - 16 Gbps Downlink and Pair #1 may provide a G5 - 16 Gbps reverse downlink. Pair #0 is connected to the Tx of the optical transmitter and Pair #1 to Rx of the optical receiver. It is also possible that a LiFi interface can be designed in a way that it can operate with either Automotive Ethernet or a MIPI-based infrastructure.

It will be appreciated that the above embodiments have been described by way of example only. Other variants or use cases of the disclosed techniques may become apparent to the person skilled in the art once given the disclosure herein. The scope of the disclosure is not limited by the described embodiments but only by the accompanying claims.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A system for use on board a vehicle (22), the system comprising:
an electronic controller (2);
a sensor device (4);
an optical wireless transmitting device (5);
a cable infrastructure (8) having a first end connected to the electronic controller; and
an interface (6) connected between a second end of the cable infrastructure and the sensor device and the optical wireless transmitting device, wherein the interface is operable to select, on a time-shared basis, between using the cable infrastructure for: i) a first function of transferring incoming data sensed by the sensor device to the electronic controller, and ii) a second function of transferring outgoing data from the electronic controller to the optical wireless transmitting device so as to be transmitted optically from the optical wireless transmitting device;
wherein the interface is configured to perform the selection in dependence on a state of motion of the vehicle.
wherein the interface (6) is configured such that the performance of said selection in dependence on the state of motion of the vehicle (22) comprises:
using the cable infrastructure (8) for the second function but not the first function when the vehicle is stationary, and/or
using the cable infrastructure for the first function but not the second function when the vehicle is moving.

2. The system of claim 1, wherein the cable infrastructure (8) is configured to use a same baseband modulation, for the transfer of the outgoing data from the electronic controller (2) to the optical wireless transmitting device (5), as used by the optical wireless transmitting device for the optical transmission of the outgoing data.

3. The system of any preceding claim, wherein the interface (6) is configured such that the performance of said selection in dependence on the state of motion of the vehicle (22) comprises:
using the cable infrastructure (8) on a time-shared basis for both the first function and the second function while the vehicle is moving, but adapting the time spent used for the first function relative to the second function in dependence on a speed of the vehicle.

4. The system of any preceding claim, wherein the optical wireless transmitting device (5) comprises a LiFi transmitter.

5. The system of any preceding claim, wherein the optical wireless transmitting device (5) comprises an optical transmitting device configured to use G.vlc or OOK as a physical layer for the optical transmission of the outgoing data.

6. The system of any preceding claim, wherein the cable infrastructure (8) comprises an Automotive Ethernet or A-PHY infrastructure, or a combination of Automotive Ethernet and A-PHY.

7. The system of any preceding claim, wherein the sensor device (4) comprises a wireless sensing device.

8. The system of claim 7, wherein the wireless sensing device (4) is an optical sensing device.

9. The system of claim 8, wherein the optical sensing device (4) comprises a camera, lidar sensor or Li-Fi data receiver.

10. The system of any preceding claim, wherein the optical wireless transmitting device (5) is a LiFi transceiver or other optical transceiver device capable of both transmitting and receiving data optically , and the second function further comprises transferring incoming data received optically by the optical received to the electronic controller (2).

11. The system of any preceding claim, wherein the cable infrastructure (8) is configured to provide a symmetrical data transfer rate for the first and second functions.

12. The system of any preceding claim, wherein the cable infrastructure (8) is configured to provide an asymmetrical data transfer rate for the second function compared to the first function.

13. A method of transferring data on board a vehicle (22) that comprises an electronic controller (2),
a sensor device (4), an optical wireless transmitting device (5), and a cable infrastructure (8); the method comprising:
selecting, on a time-shared basis, between using the cable infrastructure for: i) a first function of transferring incoming data sensed by the sensor device to the electronic controller, and ii) a second function of transferring outgoing data from the electronic controller to the optical wireless transmitting device so as to be transmitted optically from the optical wireless transmitting device;
wherein the selection is performed in dependence on a state of motion of the vehicle, and the method further comprising:
using the cable infrastructure (8) for the second function but not the first function when the vehicle is stationary, and/or
using the cable infrastructure for the first function but not the second function when the vehicle is moving.

14. A program comprising computer-readable code embodied on non-transitory computer-readable storage and configured so as when run on one or more processors based on input from an electronic controller (2) or a sensor device (4) according to claim 1 to perform the method of claim 13.

## Patentansprüche

1. System zur Verwendung an Bord eines Fahrzeugs (22), wobei das System umfasst:
eine elektronische Steuereinheit (2);
eine Sensorvorrichtung (4);
eine optische drahtlose Sendevorrichtung (5);
eine Kabelinfrastruktur (8) mit einem ersten Ende, das mit der elektronischen Steuereinheit verbunden ist; und
eine Schnittstelle (6), die zwischen einem zweiten Ende der Kabelinfrastruktur und der Sensorvorrichtung sowie der optischen drahtlosen Sendevorrichtung verbunden ist, wobei die Schnittstelle betreibbar ist, um auf einer zeitlich geteilten Basis auszuwählen zwischen einem Verwenden der Kabelinfrastruktur für: i) eine erste Funktion des Weiterleitens eingehender Daten, die durch die Sensorvorrichtung erfasst werden, an die elektronische Steuereinheit, und ii) eine zweite Funktion des Weiterleitens ausgehender Daten von der elektronischen Steuereinheit an die optische drahtlose Sendevorrichtung, damit sie von der optischen drahtlosen Sendevorrichtung optisch gesendet werden;
wobei die Schnittstelle konfiguriert ist, um die Auswahl in Abhängigkeit von einem Bewegungszustand des Fahrzeugs durchzuführen,
wobei die Schnittstelle (6) derart konfiguriert ist, dass die Durchführung der Auswahl in Abhängigkeit vom Bewegungszustand des Fahrzeugs (22) umfasst:
Verwenden der Kabelinfrastruktur (8) für die zweite Funktion, aber nicht für die erste Funktion, wenn das Fahrzeug stillsteht, und/oder
Verwenden der Kabelinfrastruktur für die erste Funktion, aber nicht für die zweite Funktion, wenn sich das Fahrzeug bewegt.

2. System nach Anspruch 1, wobei die Kabelinfrastruktur (8) konfiguriert ist, um für die Weiterleitung der ausgehenden Daten von der elektronischen Steuereinheit (2) an die optische drahtlose Sendevorrichtung (5) eine gleiche Basisbandmodulation zu verwenden, wie sie durch die optische drahtlose Sendevorrichtung für das optische Senden der ausgehenden Daten verwendet wird.

3. System nach einem der vorstehenden Ansprüche, wobei die Schnittstelle (6) derart konfiguriert ist, dass die Durchführung der Auswahl in Abhängigkeit vom Bewegungszustand des Fahrzeugs (22) umfasst:
Verwenden der Kabelinfrastruktur (8) auf einer zeitlich geteilten Basis sowohl für die erste Funktion als auch für die zweite Funktion, während sich das Fahrzeug bewegt, wobei jedoch die für die erste Funktion aufgewendete Zeit relativ zur zweiten Funktion in Abhängigkeit von einer Geschwindigkeit des Fahrzeugs angepasst wird.

4. System nach einem der vorstehenden Ansprüche, wobei die optische drahtlose Sendevorrichtung (5) einen LiFi-Sender umfasst.

5. System nach einem der vorstehenden Ansprüche, wobei die optische drahtlose Sendevorrichtung (5) eine optische Sendevorrichtung umfasst, die konfiguriert ist, um G.vlc oder OOK als physikalische Schicht für das optische Senden der ausgehenden Daten zu verwenden.

6. System nach einem der vorstehenden Ansprüche, wobei die Kabelinfrastruktur (8) eine Automotive-Ethernet- oder A-PHY-Infrastruktur oder eine Kombination aus Automotive Ethernet und A-PHY umfasst.

7. System nach einem der vorstehenden Ansprüche, wobei die Sensorvorrichtung (4) eine drahtlose Erfassungsvorrichtung umfasst.

8. System nach Anspruch 7, wobei die drahtlose Erfassungsvorrichtung (4) eine optische Erfassungsvorrichtung ist.

9. System nach Anspruch 8, wobei die optische Erfassungsvorrichtung (4) eine Kamera, einen Lidar-Sensor oder einen Li-Fi-Datenempfänger umfasst.

10. System nach einem der vorstehenden Ansprüche, wobei die optische drahtlose Sendevorrichtung (5) ein LiFi-Transceiver oder eine andere optische Transceivervorrichtung ist, die in der Lage ist, Daten optisch sowohl zu senden als auch zu empfangen, und die zweite Funktion ferner ein Weiterleiten eingehender Daten, die optisch durch den optischen Empfänger empfangen werden, an die elektronische Steuereinheit (2) umfasst.

11. System nach einem der vorstehenden Ansprüche, wobei die Kabelinfrastruktur (8) konfiguriert ist, um eine symmetrische Datenweiterleitungsrate für die erste und die zweite Funktion bereitzustellen.

12. System nach einem der vorstehenden Ansprüche, wobei die Kabelinfrastruktur (8) konfiguriert ist, um eine asymmetrische Datenweiterleitungsrate für die zweite Funktion im Vergleich zur ersten Funktion bereitzustellen.

13. Verfahren zum Weiterleiten von Daten an Bord eines Fahrzeugs (22), das eine elektronische Steuereinheit (2),
eine Sensorvorrichtung (4), eine optische drahtlose Sendevorrichtung (5) und eine Kabelinfrastruktur (8) umfasst; das Verfahren umfassend:
Auswählen, auf einer zeitlich geteilten Basis, zwischen einem Verwenden der Kabelinfrastruktur für: i) eine erste Funktion des Weiterleitens eingehender Daten, die durch die Sensorvorrichtung erfasst werden, an die elektronische Steuereinheit, und ii) eine zweite Funktion des Weiterleitens ausgehender Daten von der elektronischen Steuereinheit an die optische drahtlose Sendevorrichtung, damit sie von der optischen drahtlosen Sendevorrichtung optisch gesendet werden;
wobei die Auswahl in Abhängigkeit von einem Bewegungszustand des Fahrzeugs durchgeführt wird und das Verfahren ferner umfasst:
Verwenden der Kabelinfrastruktur (8) für die zweite Funktion, aber nicht für die erste Funktion, wenn das Fahrzeug stillsteht, und/oder
Verwenden der Kabelinfrastruktur für die erste Funktion, aber nicht für die zweite Funktion, wenn sich das Fahrzeug bewegt.

14. Programm, umfassend computerlesbaren Code, der auf einer nichtflüchtigen computerlesbaren Speicherung verkörpert ist und konfiguriert ist, um bei Ausführung auf einem oder mehreren Prozessor(en) basierend auf einer Eingabe von einer elektronischen Steuereinheit (2) oder einer Sensorvorrichtung (4) nach Anspruch 1 das Verfahren nach Anspruch 13 durchzuführen.

## Revendications

1. Système utilisable à bord d'un véhicule (22), le système comprenant :
un dispositif de commande électronique (2) ;
un dispositif de détection (4) ;
un dispositif de transmission optique sans fil (5) ;
une infrastructure câblée (8) ayant une première extrémité reliée au dispositif de commande électronique ; et
une interface (6) connectée entre une seconde extrémité de l'infrastructure câblée et le dispositif de détection et le dispositif de transmission optique sans fil, dans lequel l'interface permet de sélectionner, sur une base en temps partagé, entre l'utilisation de l'infrastructure câblée pour : i) une première fonction de transfert des données entrantes détectées par le dispositif de détection au dispositif de commande électronique, et ii) une seconde fonction de transfert de données sortantes du dispositif de commande électronique au dispositif de transmission optique sans fil de manière à ce que les données soient transmises optiquement à partir du dispositif de transmission optique sans fil ;
dans lequel l'interface est configurée pour effectuer la sélection en fonction d'un état de mouvement du véhicule ;
dans lequel l'interface (6) est configurée de telle sorte que la réalisation de ladite sélection en fonction de l'état de déplacement du véhicule (22) comprend :
l'utilisation de l'infrastructure câblée (8) pour la seconde fonction, mais pas la première fonction lorsque le véhicule est à l'arrêt, et/ou
l'utilisation de l'infrastructure câblée pour la première fonction, mais pas pour la seconde fonction lorsque le véhicule est en mouvement.

2. Système selon la revendication 1, dans lequel l'infrastructure câblée (8) est configurée pour utiliser une même modulation en bande de base, pour le transfert des données sortantes du dispositif de commande électronique (2) au dispositif de transmission optique sans fil (5), telle qu'utilisée par le dispositif de transmission optique sans fil pour la transmission optique des données sortantes.

3. Système selon l'une quelconque revendication précédente, dans lequel l'interface (6) est configurée de telle sorte que la réalisation de ladite sélection en fonction de l'état de déplacement du véhicule (22) comprend :
l'utilisation de l'infrastructure câblée (8) sur une base en temps partagé à la fois pour la première fonction et la seconde fonction pendant que le véhicule se déplace, mais l'adaptation du temps passé utilisé pour la première fonction par rapport à la seconde fonction en fonction d'une vitesse du véhicule.

4. Système selon l'une quelconque revendication précédente, dans lequel le dispositif de transmission optique sans fil (5) comprend un émetteur LiFi.

5. Système selon l'une quelconque revendication précédente, dans lequel le dispositif de transmission optique sans fil (5) comprend un dispositif de transmission optique configuré pour utiliser G.vlc ou OOK comme couche physique pour la transmission optique des données sortantes.

6. Système selon l'une quelconque revendication précédente, dans lequel l'infrastructure câblée (8) comprend une infrastructure Ethernet automobile ou A-PHY, ou une combinaison d'Ethernet automobile et A-PHY.

7. Système selon l'une quelconque revendication précédente, dans lequel le dispositif de détection (4) comprend un dispositif de détection sans fil.

8. Système selon la revendication 7, dans lequel le dispositif de détection sans fil (4) est un dispositif de détection optique.

9. Système selon la revendication 8, dans lequel le dispositif de détection optique (4) comprend une caméra, un capteur lidar ou un récepteur de données Li-Fi.

10. Système selon l'une quelconque revendication précédente, dans lequel le dispositif de transmission optique sans fil (5) est un émetteur-récepteur LiFi ou un autre dispositif émetteur-récepteur optique capable à la fois de transmettre et de recevoir des données de manière optique, et la seconde fonction comprend en outre le transfert de données entrantes reçues optiquement par le récepteur optique au dispositif de commande électronique (2).

11. Système selon l'une quelconque revendication précédente, dans lequel l'infrastructure câblée (8) est configurée pour fournir un débit de transfert de données symétrique pour la première et la seconde fonction.

12. Système selon l'une quelconque revendication précédente, dans lequel l'infrastructure câblée (8) est configurée pour fournir un débit de transfert de données asymétrique pour la seconde fonction par rapport à la première fonction.

13. Procédé de transfert de données à bord d'un véhicule (22) qui comprend un dispositif de commande électronique (2),
un dispositif de détection (4), un dispositif de transmission optique sans fil (5) et une infrastructure câblée (8) ; le procédé comprenant :
la sélection, sur une base en temps partagé, entre l'utilisation de l'infrastructure câblée pour : i) une première fonction de transfert de données entrantes détectées par le dispositif de détection au dispositif de commande électronique, et ii) une seconde fonction de transfert de données sortantes du dispositif de commande électronique au dispositif de transmission optique sans fil de manière à ce que les données soient transmises optiquement à partir du dispositif de transmission optique sans fil ;
dans lequel la sélection est réalisée en fonction d'un état de déplacement du véhicule, et le procédé comprenant en outre :
l'utilisation de l'infrastructure câblée (8) pour la seconde fonction, mais pas la première fonction lorsque le véhicule est à l'arrêt, et/ou
l'utilisation de l'infrastructure câblée pour la première fonction, mais pas pour la seconde fonction lorsque le véhicule est en mouvement.

14. Programme comprenant un code lisible par ordinateur incorporé sur une mémoire volatile lisible par ordinateur et configuré de manière à ce que, lorsqu'il est exécuté sur un ou plusieurs processeurs en fonction d'une entrée provenant d'un dispositif de commande électronique (2) ou d'un dispositif de détection (4) selon la revendication 1, met en œuvre le procédé selon la revendication 13.
